# FASCICULE DE BREVET EUROPEEN

(11) **EP 0 612 077 B1**
(45) Date de publication et mention de la délivrance du brevet: **21.05.1997**
(21) Numéro de dépôt: 94400055.3
(22) Date de dépôt: 10.01.1994
(51) Int. Cl.: G21C 13/10, G21C 17/00

(54) **Enceinte de confinement et de recouvrement de la surface extérieure du couvercle de cuve d'un réacteur nucléaire**
Verschluss- und Wandabdeckungsanordnung, für die Aussenseite des Behälterdeckels eines Kernreaktors
Confinement and wall-cover structure, of the external surface of the cover of a nuclear reactor pressure vessel

(30) Priorité: 17.02.1993 FR 9301795
(43) Date de publication de la demande: 24.08.1994
(73) Titulaire: FRAMATOME, 92400 Courbevoie (FR)
(72) Inventeur: Bouron, Norbert, F-78260 Acheres (FR); Falduti, Claude, F-91240 Saint-Michel-sur-Orge (FR)
(74) Mandataire: Bouget, Lucien

(56) Documents cités:
- DE-A- 2 921 707
- DE-A- 3 027 510
- FR-A- 2 098 239
- GB-A- 828 468
- GB-A- 891 353
- GB-A- 1 139 406
- US-A- 3 087 327
- US-A- 4 070 221

## Description

L'invention concerne une enceinte étanche de confinement et de recouvrement de la surface supérieure convexe du couvercle de la cuve d'un réacteur nucléaire à eau sous pression.

Les réacteurs nucléaires à eau sous pression comportent généralement une cuve renfermant le coeur du réacteur qui est plongé dans l'eau sous pression de refroidissement du réacteur.

La cuve du réacteur de forme générale cylindrique comporte un couvercle en forme de calotte sphérique qui est rapporté sur sa partie supérieure, de manière que le couvercle présente une surface supérieure externe convexe. Le couvercle est percé d'ouvertures au niveau de chacune desquelles est fixée par soudure, en position verticale, une pièce tubulaire de traversée constituant un adaptateur assurant le passage d'un prolongateur d'une grappe de réglage de la réactivité du coeur ou le passage d'un moyen de mesure à l'intérieur du coeur tel qu'une colonne de thermocouples.

Chacune des pièces tubulaires de traversée est engagée dans une ouverture traversant le couvercle de la cuve et soudée sur la surface inférieure concave du couvercle par une soudure annulaire.

Les adaptateurs destinés à recevoir un prolongateur d'une grappe de réglage de la réactivité du coeur ont une partie supérieure saillante au-dessus du couvercle de la cuve sur laquelle est fixé un mécanisme de commande permettant de déplacer le prolongateur solidaire de la grappe de réglage appelée barre de commande.

Des contrôles effectués sur les réacteurs nucléaires en service ont montré que certains des adaptateurs de traversée du couvercle de la cuve présentent des fissures, après un certain temps d'utilisation du couvercle, en particulier dans la zone de soudure des adaptateurs, au voisinage de la surface inférieure concave du couvercle. Ces fissures sont susceptibles d'évoluer jusqu'à traverser la totalité de la paroi de l'adaptateur. Dans ce cas, il peut se produire une fuite limitée mais gênante de fluide primaire constitué par de l'eau sous pression, vers l'extérieur du couvercle, à travers la fissure et l'espace compris entre l'adaptateur et l'ouverture de traversée du couvercle. L'eau sous pression constituant le liquide de fuite qui est à très haute température et qui se trouve dépressurisée s'évapore, si bien qu'il se produit un dégagement de vapeur au-dessus du couvercle. La vapeur entraîne certains produits de fission radio-actifs qui sont susceptibles de se retrouver dans l'atmosphère au-dessus de la cuve du réacteur nucléaire.

Il est nécessaire de détecter très rapidement la présence d'un adaptateur de traversée du couvercle de la cuve présentant une fissure traversante conduisant à une fuite de fluide primaire, afin d'effectuer une réparation après arrêt du réacteur nucléaire et pour éviter le dégagement de substances radio-actives gazeuses dans l'enceinte de confinement du réacteur nucléaire.

Pour éviter un transfert de chaleur important entre le couvercle de la cuve qui est à haute température et les mécanismes de commande disposés à la partie supérieure des adaptateurs, et afin de protéger ceux-ci vis-à-vis d'une température trop élevée, on place au-dessus du couvercle de la cuve, une enveloppe appelée casing en matériau calorifuge qui vient coiffer le couvercle de la cuve, à l'intérieur d'une jupe cylindrique entourant les adaptateurs.

De manière à pouvoir engager le casing entre les adaptateurs, celui-ci est constitué d'éléments modulaires amovibles qui assemblés forment une enveloppe cylindrique avec un plan horizontal circulaire en partie supérieure. Le casing ainsi constitué est percé d'ouvertures de grandes dimensions, de sorte qu'en position sur le couvercle de la cuve il n'assure aucune étanchéité autour des adaptateurs. Le casing ne réalise donc aucun confinement permettant de retenir et éventuellement de détecter des gaz de fuite au-dessus du couvercle de la cuve.

Lorsque le casing est réalisé à partir d'éléments tels que des panneaux introduits entre les adaptateurs et assemblés entre eux, ces panneaux ne sont pas reliés de manière étanche les uns aux autres, de sorte que le casing n'apporte aucune amélioration en ce qui concerne la sécurité et la surveillance des fuites.

Le but de l'invention est donc de proposer une enceinte de confinement et de recouvrement de la surface supérieure convexe du couvercle de la cuve d'un réacteur nucléaire à eau sous pression de forme bombée, traversé par des adaptateurs tubulaires comportant une partie saillante au-dessus de la surface supérieure du couvercle de la cuve à l'extrémité de laquelle est fixé un mécanisme de déplacement d'une barre de commande, l'enceinte comportant une paroi latérale de forme tubulaire reposant sur la surface supérieure du couvercle de cuve et entourant l'ensemble des adaptateurs de traversée du couvercle et une paroi supérieure de fermeture fixée sur la partie supérieure de la paroi latérale en-dessous des mécanismes de commande et traversée par les adaptateurs, et permettant d'assurer une retenue d'un gaz pouvant s'échapper à travers le couvercle de cuve dans le cas d'une fuite et une détection du gaz de fuite au voisinage de la surface supérieure convexe du couvercle de cuve.

Dans ce but, la paroi latérale et la paroi supérieure sont réalisées sous la forme de parois calorifuges reliées entre elles et reposant sur le couvercle de la cuve par l'intermédiaire de joints d'étanchéité, des joints assurant également l'étanchéité des passages de traversée des adaptateurs dans la paroi supérieure de manière à délimiter une chambre de récupération de fluide entre l'enceinte et la surface extérieure du couvercle de la cuve et l'enceinte comporte un moyen de prélèvement de gaz à l'intérieur de la chambre de récupération du fluide.

De préférence, l'enceinte est constituée par des éléments modulaires tels que des panneaux qui sont assemblés entre eux avec interposition de joints étanches.

Afin de bien faire comprendre l'invention, on va maintenant décrire, à titre d'exemple non limitatif, en se référant aux figures jointes en annexe, une enceinte de confinement et de recouvrement de la surface externe convexe du couvercle de la cuve d'un réacteur nucléaire à eau sous pression.

La figure 1 est une vue en coupe par un plan vertical de l'ensemble de la cuve d'un réacteur nucléaire à eau sous pression comportant un couvercle recouvert par une enceinte suivant l'invention.

La figure 2 est une vue en coupe par un plan vertical à plus grande échelle du couvercle de la cuve représentée sur la figure 1 et de l'enceinte de confinement.

La figure 3 est une vue à plus grande échelle du détail 3 de la figure 2.

La figure 4 est une vue en perspective du détail 4 de la figure 2 montrant un moyen de jonction de deux parois de l'enceinte.

La figure 5 est une vue schématique en perspective de la paroi latérale de l'enceinte disposée autour des adaptateurs traversant le couvercle de la cuve.

La figure 6 est une vue en coupe d'une enceinte réalisée sous forme modulaire à partir de panneaux calorifuges.

La figure 7 est une vue de dessus suivant 7 de la figure 6.

La figure 8 est une vue en perspective d'une variante de réalisation d'un panneau de l'enceinte représentée sur les figures 6 et 7.

La figure 9 est une vue en perspective de panneaux de l'enceinte représentée sur les figures 6 et 7.

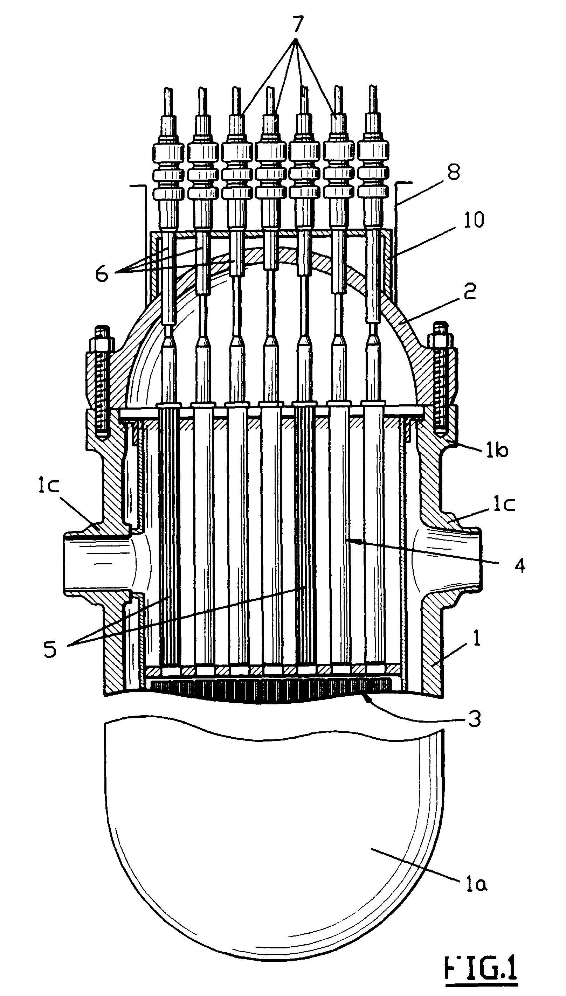

Sur la figure 1, on voit la cuve 1 d'un réacteur nucléaire qui est constituée par une enveloppe tubulaire de forte épaisseur fermée à sa partie inférieure par un fond bombé la et qui comporte à sa partie supérieure une bride lb destinée à recevoir le couvercle de la cuve 2 de forme hémisphérique qui est fixé de manière étanche sur la cuve 1, lorsque le réacteur est en service.

La cuve 1 comporte un ensemble de tubulures 1c qui permettent de relier le volume intérieur de la cuve et le circuit primaire du réacteur, de manière que l'eau sous pression de refroidissement du réacteur pénètre dans la cuve et ressorte de celle-ci par l'intermédiaire des tubulures lures 1c.

L'eau sous pression vient en contact avec le coeur 3 du réacteur constitué par des assemblages combustibles disposés à l'intérieur de la cuve.

Au-dessus du coeur 3 du réacteur, sont disposés des équipements internes supérieurs 4 permettant d'assurer le guidage de grappes ou barres de commande 5 qui peuvent être introduites dans certains assemblages du coeur pour régler la réactivité, en fonction de la puissance demandée au réacteur nucléaire.

Les grappes de contrôle 5 sont fixées à l'extrémité de prolongateurs qui traversent le couvercle de la cuve 2 à l'intérieur d'adaptateurs de traversée 6.

Sur la partie supérieure des adaptateurs 6 sont fixés des mécanismes de commande 7 qui coopèrent avec les prolongateurs pour assurer le déplacement des grappes de contrôle 5 dans la direction verticale.

L'ensemble des adaptateurs 6 traversant le couvercle de la cuve 2 est disposé à l'intérieur d'une jupe 8 en tôle métallique (appelée jupe du couvercle de cuve).

Une enveloppe calorifuge ou casing 10 est disposée au-dessus de la surface externe convexe du couvercle 2, dans la zone de traversée des adaptateurs 6, à l'intérieur de la jupe 8.

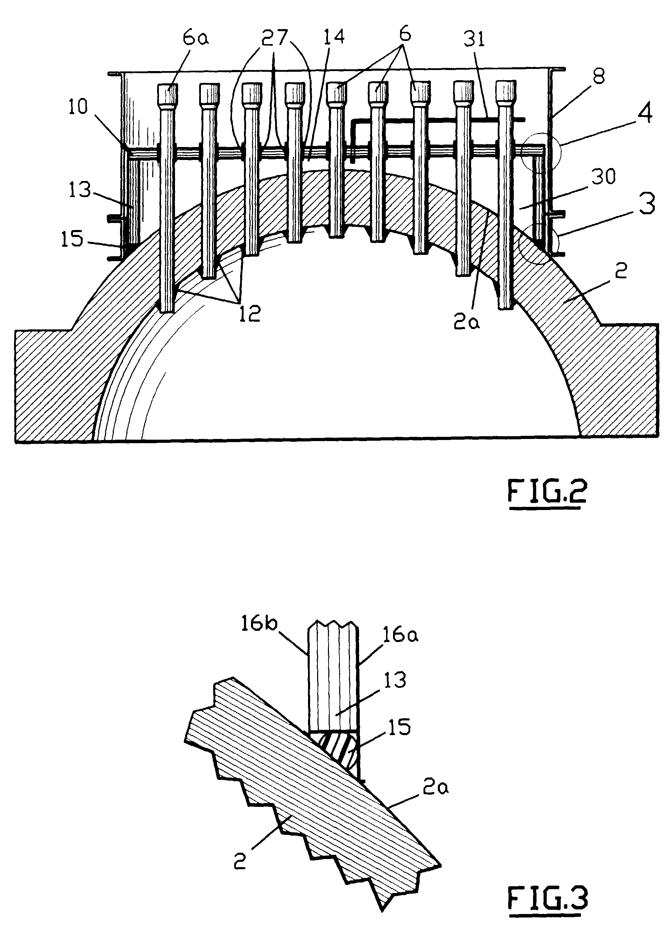

On va maintenant se reporter à la figure 2 pour décrire de manière plus détaillée, le couvercle 2, les adaptateurs de traversée 6 et l'enceinte de recouvrement 10.

Les adaptateurs 6 sont réalisés sous forme tubulaire et sont engagés chacun à l'intérieur d'une ouverture traversant le couvercle 2 de la cuve 1 dans la direction axiale de la cuve. Chacun des adaptateurs 6 est fixé sur le couvercle de cuve, au voisinage de sa surface interne concave, par une soudure 12.

Chacun des adaptateurs 6 comporte une partie supérieure élargie 6a sur laquelle vient se fixer un mécanisme de commande correspondant (non représenté sur la figure 2).

L'ensemble des adaptateurs 6 traverse le couvercle de la cuve, dans une zone centrale sensiblement circulaire autour de laquelle est placée une jupe 8 en tôle métallique reposant sur la surface supérieure convexe du couvercle 2.

L'enceinte 10 suivant l'invention qui est disposée à l'intérieur de la jupe 8 dans une disposition coaxiale par rapport à la jupe 8 comporte une paroi latérale cylindrique 13 et une plaque supérieure plane 14 de forme circulaire. La plaque supérieure 14 qui est généralement réalisée de manière modulaire, comme il sera expliqué plus loin, délimite un réseau d'ouvertures dans chacune desquelles est engagé un adaptateur tubulaire 6.

Comme il est visible sur la figure 3, la paroi latérale tubulaire de forme cylindrique 13 repose sur la surface supérieure convexe 2a du couvercle de cuve 2 par l'intermédiaire d'un joint annulaire 15 engagé dans un logement délimité par les parties inférieures de deux viroles tubulaires 16a et 16b délimitant la paroi calorifuge 13 vers l'extérieur et vers l'intérieur respectivement.

La paroi latérale calorifuge 13 est constituée par les deux viroles coaxiales 16a et 16b en tôle d'acier inoxydable entre lesquelles sont intercalées des plaques en acier inoxydable gauffrées, juxtaposées les unes par rapport aux autres, de manière à constituer un ensemble alvéolaire entre les parois externe et interne 16a et 16b assurant une bonne isolation thermique.

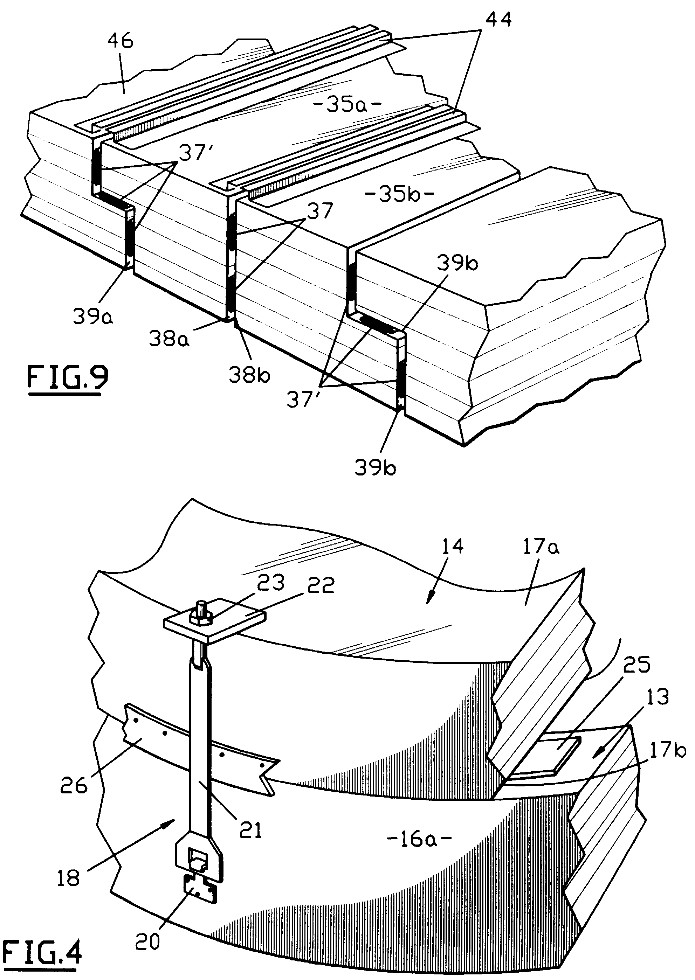

Comme il est visible sur la figure 4, la paroi supérieure 14 de l'enceinte de forme circulaire est constituée par des plaques en acier inoxydable 17a et 17b parallèles entre elles entre lesquelles sont empilées et intercalées des tôles minces en acier inoxydable gauffrées, destinées à constituer une structure alvéolaire d'isolation.

Les faces des parois 13 et 14 sont brillantes et permettent de réfléchir le rayonnement.

Comme il est visible sur la figure 4, la paroi supérieure plane 14 est fixée sur le bord supérieur de la paroi annulaire 13, par un ensemble de dispositifs de serrage 18 répartis sur la périphérie de la paroi 13 et de la plaque 14. L'un de ces dispositifs de serrage 18 a été représenté sur la figure 4. Ce dispositif 18 comporte une ferrure 20 d'accrochage sur la virole externe 16a de la paroi 13, un dispositif de tension 21 comportant une tige filetée à son extrémité, une plaque de serrage 22 et un écrou 23 vissé sur la partie d'extrémité filetée de la tige du tendeur 21 et venant en appui sur la plaque de serrage 22.

Un joint d'étanchéité 25 de forme annulaire plate est intercalé entre la surface supérieure de la paroi 13 et la partie périphérique de la surface inférieure de la plaque 14.

Les dispositifs 18 assurent à la fois l'assemblage de la paroi 13 et de la paroi 14 et le serrage du joint d'étanchéité 25.

Un couvre-joint 26 est disposé dans la zone de jonction entre les parois 14 et 13, à la périphérie externe de cette zone de jonction.

Comme il est visible sur la figure 2, des joints d'étanchéité annulaires 27 sont disposés autour de chacun des adaptateurs 6, dans sa partie traversant la paroi 14. Les joints 27 assurent l'étanchéité du passage des adaptateurs au travers de la paroi 14.

Lorsque l'enceinte calorifuge 10 repose sur la surface supérieure convexe 2a du couvercle 2, comme représenté sur la figure 2, le joint 15 est écrasé entre la partie inférieure de la paroi latérale 13 et le couvercle de cuve, sous l'effet du poids de l'enceinte.

Le joint 25 assurant l'étanchéité entre les parois 13 et 14 est serré par les dispositifs 18 et le passage étanche des adaptateurs 6 à travers la paroi 14 est assuré par les joints 27 serrés sur les surfaces externes des adaptateurs.

De ce fait, l'enceinte 10 délimite avec la surface supérieure 2a du couvercle 2, à l'intérieur de la jupe 8, une chambre 30 isolée du milieu extérieur. Dans le cas où l'un des adaptateurs 6 présente une fissure, par exemple au niveau d'une zone de soudure 12, de l'eau sous pression remplissant la cuve du réacteur nucléaire est susceptible de s'infiltrer dans la fissure et l'ouverture de traversée de l'adaptateur dans le couvercle de cuve, pour se vaporiser et s'échapper au-dessus de la surface supérieure 2a du couvercle 2. Dans ce cas, l'enceinte 10 assure la retenue des gaz de fuite s'échappant au niveau de l'adaptateur présentant une fissure.

Un tube 31 traversant la paroi 14 de manière étanche à l'une de ses extrémités et relié à son autre extrémité à un appareil de détection non représenté permet de prélever de l'air contenu dans la chambre 30 et d'assurer la détection d'un gaz radio-actif éventuellement contenu dans l'air prélevé dans la chambre 30.

Dans le cas où un gaz radio-actif tel que le xénon qui se forme dans la cuve du réacteur est décelé dans le prélèvement, on en déduit la présence d'une fuite au niveau de l'un des adaptateurs 6.

En outre, les mécanismes de commande des grappes fixés sur les adaptateurs 6 sont refroidis par une circulation d'air à l'intérieur de la jupe 8.

La présence de l'enceinte de confinement 10 permet d'éviter un entraînement des gaz radio-actifs traversant le couvercle de la cuve en cas de fuite au niveau d'un adaptateur, par l'air de refroidissement.

L'enceinte 10 permet donc de réaliser de manière très efficace le confinement de gaz de fuite éventuelle au-dessus du couvercle 2 et la détection de ces gaz de fuite provenant de l'intérieur de la cuve du réacteur.

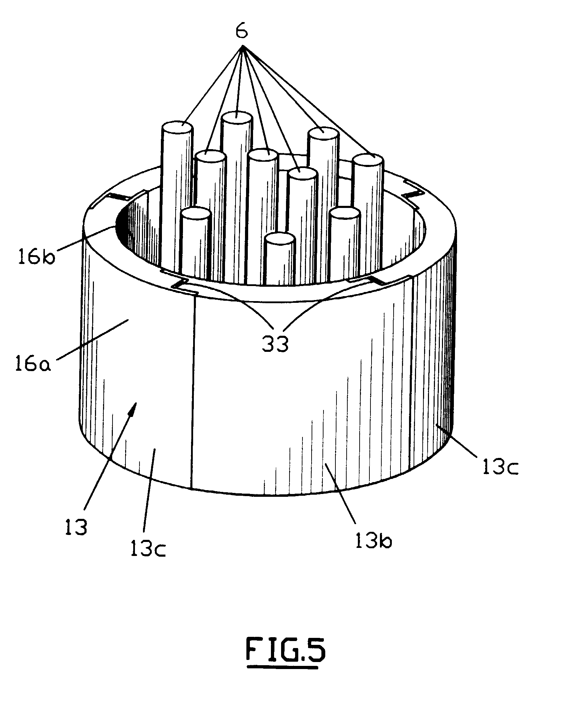

Sur la figure 5, on a représenté un mode de réalisation préférentiel de la paroi latérale annulaire 13 de l'enceinte 10. La paroi annulaire 13 est constituée par des secteurs cylindriques tels que 13a, 13b, 13c reliés entre eux suivant des zones délimitées par des génératrices avec interposition de joints d'étanchéité 33 disposés suivant la direction des génératrices.

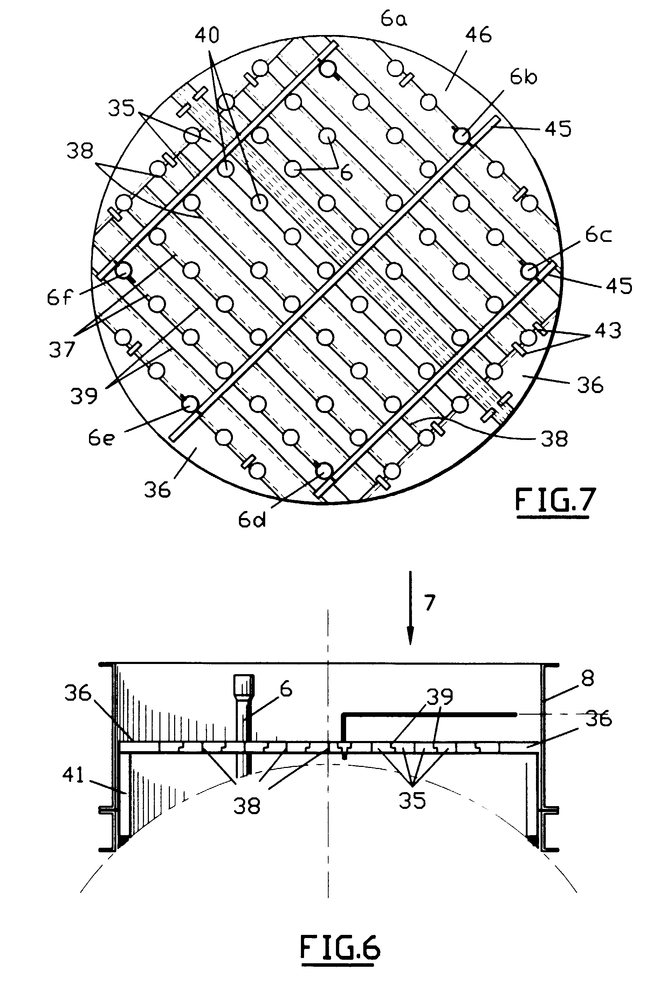

Sur les figures 6 et 7, on a représenté un mode de réalisation préférentiel de la plaque supérieure 46 d'une enceinte, de forme circulaire comportant une paroi périphérique 41 de forme cylindrique.

La paroi 46 est constituée par des panneaux 35 en matériau calorifuge en forme de lames allongées rectangulaires, juxtaposés et rapportés les uns contre les autres suivant leurs grands côtés et par des panneaux en matériau calorifuge 36 en forme de secteurs circulaires rapportés contre les extrémités des panneaux 35 ou contre les bords longitudinaux des deux panneaux 35 disposés vers l'extérieur de la paroi 46.

Chacun des panneaux calorifuges 35 et 36 est constitué de la même manière que la paroi 14 décrite plus haut et représentée sur la figure 4.

Les faces latérales des panneaux rapportés les uns contre les autres sont recouvertes d'une tôle en acier inoxydable plane, de manière à assurer une bonne portée des bords des panneaux contre des joints d'étanchéité 37 intercalés entre chacun des bords de panneaux rapportés les uns contre les autres.

Comme il est visible sur la figure 6, certains des bords de panneaux 38 sont des bords totalement plans et d'autres bords de panneaux 39 rapportés les uns contre les autres présentent des formes correspondantes de marches d'escalier.

Sur la figure 9, on a représenté deux panneaux adjacents 35a et 35b rapportés l'un contre l'autre par l'intermédiaire de bords plans 38a et 38b entre lesquels sont intercalés un ou plusieurs joints d'étanchéité 37 constitués par une bande plate.

Les panneaux 35a et 35b comportent de plus des bords externes 39 en forme de marches d'escalier assurant la jonction des panneaux 35a et 35b avec deux autres panneaux immédiatement adjacents.

Des joints d'étanchéité 37' sont intercalés sur chacune des parties planes des joints 39a et 39b en forme de marches d'escalier.

Comme il est visible sur les figures 6 et 7, les faces de jonction planes 38 des panneaux 35 délimitent des logements 40 pour un ensemble d'adaptateurs 6 alignés suivant une rangée dans la direction longitudinale des panneaux 35.

Pour l'ensemble de la paroi 46, les panneaux 35 ménagent soixante dix-sept ouvertures de traversée pour les soixante dix-sept adaptateurs traversant le couvercle de la cuve du réacteur nucléaire à eau sous pression.

Les panneaux 35 sont engagés sur les adaptateurs 6 disposés suivant une rangée, au moment de leur pose pour constituer la paroi 46, par l'intermédiaire des ouvertures constituant les passages circulaires 40. Les joints d'étanchéité sont intercalés entre les bords des panneaux et les adaptateurs, de manière à assurer une jonction étanche entre les panneaux et les adaptateurs. Les joints d'étanchéité 37 sont également intercalés entre les portions planes des bords des panneaux entre les passages 40 des adaptateurs.

Certains des panneaux reposent à leurs extrémités sur les bords supérieurs de la paroi latérale 41 de forme tubulaire qui peut être réalisée de manière analogue à la paroi latérale 13 représentée sur la figure 5 et engagés à l'intérieur de la jupe 8 fixée sur le couvercle de cuve.

D'autres pannaux sont reliés à leurs extrémités par des dispositifs d'attache 43 aux panneaux d'extrémité 36 en forme de secteurs circulaires.

Les bords des panneaux comportant des surfaces en escalier ne comportent pas d'ouvertures de passage d'adaptateurs et sont engagés sur un bord correspondant d'un panneau adjacent, comme représenté sur la figure 9.

Des couvre-joints profilés 44 sont fixés sur la surface supérieure de la paroi 46, au niveau de chacun des joints rectilignes entre les bords de panneaux.

Des poutres anti-soulèvement 45 sont fixées par boulonnage, au voisinage de leurs extrémités sur les adaptateurs périphériques tels que 6a, 6b, 6c, 6d, 6e et 6f représentés sur la figure 7.

Les poutres anti-soulèvement 45 pourraient être également fixées à leurs extrémités sur la jupe 8 entourant les adaptateurs et disposée au-dessus du couvercle.

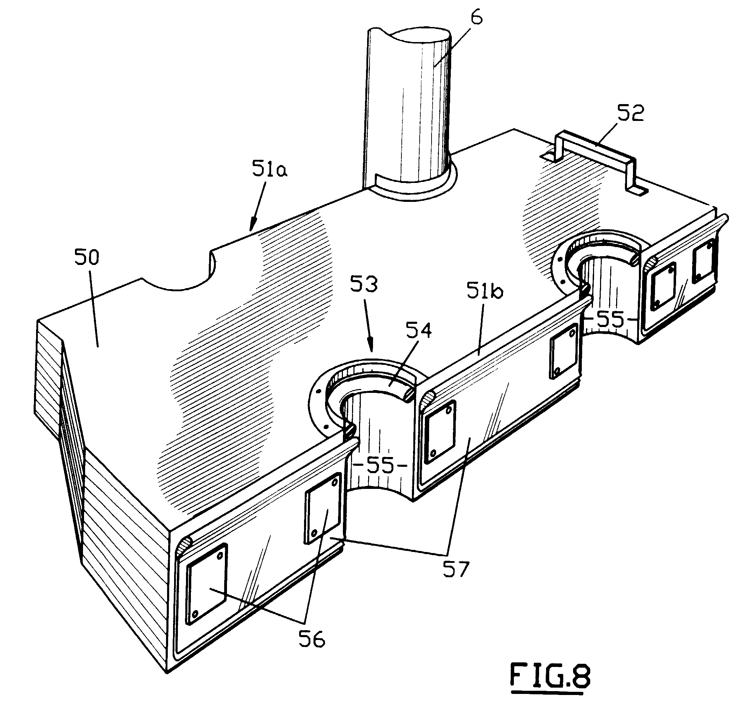

Sur la figure 8, on a représenté un panneau 50, suivant une variante de réalisation dans laquelle le panneau présente une largeur correspondant à la distance entre deux rangées successives d'adaptateurs 6.

Dans ce mode de réalisation, le panneau 50 comporte deux bords 51a et 51b constitués par des faces planes dans lesquelles sont prévues des ouvertures semi-cylindriques 55 au niveau de chacun des adaptateurs 6 des rangées situées de part et d'autre du panneau 50.

Le panneau 50 est réalisé de la même manière que les panneaux 35 représentés sur les figures 6, 7 et 9 et que la paroi 14 représentée sur la figure 4. Le panneau 50 est un panneau calorifuge comportant deux plaques parallèles en acier inoxydable entre lesquelles sont intercalées des feuilles gauffrées en acier inoxydable constituant une masse alvéolaire d'isolation thermique.

Sur chacun des bords plans 51a et 51b, entre les ouvertures semi-cylindriques de passage des adaptateurs 6, sont fixés des joints d'étanchéité 57, par l'intermédiaire de plaques de fixation 56 vissées sur les faces 51a et 51b du panneau 50.

Les joints d'étanchéité 57 sont réalisés sous la forme de bandes plates comportant un rebord supérieur arrondi et élargi constituant une lèvre d'étanchéité.

Des panneaux adjacents aux panneaux 50 peuvent être rapportés suivant les bords 51a et 51b, ces panneaux comportant des bords plans dans lesquels sont prévues des ouvertures semi-cylindriques dans des positions correspondant aux positions des adaptateurs 6 qui viennent s'appliquer contre les lèvres d'étanchéité des joints 57 lors du montage et de l'assemblage des panneaux adjacents sur le panneau 50.

Les ouvertures semi-cylindriques des panneaux adjacents mis en coïncidence constituent des logements 55 pour les adaptateurs 6. Dans chacun des logements 55 est introduit un joint d'étanchéité torique 54 maintenu par un flasque 53 vissé sur les deux panneaux en position adjacente.

Les joints toriques 54 assurent un passage étanche des adaptateurs 6 dans les ouvertures de traversée 55.

Les panneaux 50 peuvent comporter des poignées de manutention et de transport telles que 52 à leurs extrémités pour faciliter leur mise en place.

Chacun des panneaux 50 qui est mis en place entre deux rangées rectilignes successives d'adaptateurs 6 présente une longueur telle que le panneau vienne reposer à ses extrémités sur une paroi latérale cylindrique entourant l'ensemble des adaptateurs et constituant la paroi supérieure de l'enceinte de confinement.

Les panneaux réalisés sous forme autoportante et reposant par leurs extrémités sur la paroi latérale ont une longueur voisine de 3,5 m pour les plus longs d'entre eux.

Les panneaux 50 sont fixés sur la paroi latérale cylindrique par des dispositifs de fixation à vis tels que représentés sur la figure 4 et permettant de mettre en compression un joint d'étanchéité entre les panneaux 50 et la paroi latérale.

Le joint d'étanchéité intercalé entre la partie inférieure de la paroi latérale et le couvercle tel que le joint 15 représenté sur la figure 3, les joints d'étanchéité entre la paroi latérale et la paroi supérieure de l'enceinte ainsi que les joints entre les panneaux constituant les parois et entre les adaptateurs et les panneaux, dans les modes de réalisation qui ont été décrits ci-dessus, doivent être réalisés en un matériau qui soit compatible sur le plan métallurgique et chimique avec le matériau constituant la cuve et les structures environnantes. En outre, ces joints doivent supporter des températures aussi élevées que 350°C.

De tels joints peuvent être réalisés en l'un des matériaux suivants :
- fibres de verre tressées,
- fibres céramiques tressées,
- enveloppe de toile de verre bourrée de fibres de verre en vrac,
- enveloppe de fibre de céramique bourrée de fibres céramiques en vrac,
- tresse métallique en acier inoxydable austénitique 18.9 ou 18.10,
- tresse en fibres de verre dans laquelle est incorporé un ressort en acier inoxydable.
- lames flexibles en acier inoxydable austénitique,
- joint de silicone (dans le cas où la température maximale d'utilisation des joints ne dépasse pas 270°C).

La liaison des panneaux est assurée par des attaches mécaniques permettant d'obtenir une compression élastique des joints ou le maintien de ces joints dans le cas de joints glissants. Il est nécessaire d'assurer des déplacements relatifs des panneaux pour absorber des dilatations thermiques des panneaux constituant le calorifuge, des dilations du couvercle de cuve et des déplacements des adaptateurs par rapport aux panneaux dues à des dilatations thermiques.

Les panneaux constituant la paroi supérieure de l'enceinte peuvent être facilement démontés pour accéder au couvercle ou aux adaptateurs, lors des opérations de maintenance. La remise en place et le montage initial des panneaux sont également facilités du fait de la conception des panneaux et de leurs moyens d'attache.

On peut prévoir un réseau de tubulures fixé ou ménagé sur la surface interne de la paroi supérieure de l'enceinte, ce réseau de tubulures étant relié à une tuyauterie de prélèvement telle que la tuyauterie 31 représentée sur la figure 2 et comportant un ensemble d'ouvertures de prélèvement débouchant dans la chambre 30 ménagée entre l'enceinte 10 et le couvercle de cuve et réparties sur la surface supérieure interne de l'enceinte. On effectue ainsi des prélèvements unitaires en un grand nombre de points au-dessus du couvercle, de manière que la détection d'un gaz de fuite au niveau d'un adaptateur soit réalisé de manière très sûre et très rapide.

Le réseau de prélèvement ou encore un second réseau semblable au réseau de prélèvement peut être utilisé pour réaliser l'injection d'un gaz dans la chambre 30, par exemple un gaz chargé en un élément radio-actif, tel que l'azote 13 permettant d'effectuer un contrôle et un étalonnage de l'appareillage de détection.

L'enceinte de confinement et de recouvrement suivant l'invention permet donc de délimiter une chambre sensiblement étanche au-dessus du couvercle susceptible de recueillir et de retenir les gaz de fuite provenant de l'intérieur de la cuve du réacteur.

On améliore ainsi, de manière simple et peu coûteuse, la sécurité de l'exploitation du réacteur nucléaire.

De plus, l'isolation thermique de la surface supérieure convexe du couvercle de cuve est sensiblement améliorée et l'air de refroidissement et de balayage des mécanismes des adaptateurs n'est pas susceptible de venir en contact avec la surface supérieure du couvercle de cuve.

L'invention ne se limite pas aux modes de réalisation qui ont été décrits.

C'est ainsi qu'on peut envisager d'autres formes de panneaux ou éléments modulaires pour constituer l'enceinte de confinement et de recouvrement du couvercle de la cuve d'un réacteur nucléaire.

On peut également imaginer l'utilisation de matériaux différents de ceux qui ont été décrits pour constituer les panneaux calorifuges.

## Revendications

1. Enceinte (10) de confinement et de recouvrement de la surface supérieure convexe (2a) du couvercle (2) de la cuve d'un réacteur nucléaire à eau sous pression de forme bombée, traversé par des adaptateurs tubulaires (6) comportant une partie saillante au-dessus de la surface supérieure (2a) du couvercle (2) de la cuve (1) à l'extrémité de laquelle est fixé un mécanisme de déplacement (7) d'une barre de commande, l'enceinte (10) comportant une paroi latérale (13) de forme tubulaire reposant sur la surface supérieure (2a) du couvercle (2) de cuve et entourant l'ensemble des adaptateurs (6) de traversée du couvercle (2) et une paroi supérieure de fermeture (14) fixée sur la partie supérieure de la paroi latérale (13) en-dessous des mécanismes de commande (7) et traversée par les adaptateurs (6), caractérisée par le fait que la paroi latérale (13) et la paroi supérieure (14) sont réalisées sous la forme de parois calorifuges reliées entre elles et reposant sur le couvercle (2) de la cuve par l'intermédiaire de joints d'étanchéité (15, 25), des joints (27) assurant également l'étanchéité des passages de traversée des adaptateurs (6) dans la paroi supérieure (14) de manière à délimiter une chambre (30) de récupération de fluide entre l'enceinte (10) et la surface extérieure du couvercle (2) de la cuve, l'enceinte (10) comportant un moyen (31) de prélèvement de gaz à l'intérieur de la chambre (30) de récupération du fluide.

2. Enceinte suivant la revendication 1, caractérisée par le fait que la paroi supérieure (14, 16) est constituée par des panneaux plans (35, 36, 50) assemblés entre eux suivant leurs bords avec interposition de joints d'étanchéité (37, 37', 57), une partie au moins des bords de panneaux délimitant des ouvertures de traversée (55) des adaptateurs (6).

3. Enceinte suivant la revendication 2, caractérisée par le fait que chacun des panneaux (35, 35a, 35b) comporte une première face de raccordement latérale plane (38, 38a, 38b) et une seconde face de raccordement latérale en forme de marche d'escalier (39, 39a, 39b), les ouvertures de passage des adaptateurs (6) étant ménagées dans les faces planes de raccordement (38, 38a, 38b) des panneaux (35, 35a, 35b).

4. Enceinte suivant la revendication 2, caractérisée par le fait que chacun des panneaux (50) comporte deux faces latérales opposées de raccordement (51a, 51b) planes dans lesquelles sont ménagées des ouvertures (55) de passage des adaptateurs (6).

5. Enceinte suivant l'une quelconque des revendications 1 à 4, caractérisée par le fait que le moyen (31) de prélèvement de fluide est constitué par un réseau de prélèvement de fluide en une pluralité de points sur la surface inférieure de la paroi supérieure plane (14, 16).

6. Enceinte suivant l'une quelconque des revendications 1 à 5, caractérisée par le fait qu'elle comporte de plus au moins deux poutres (45) de maintien des panneaux (35, 35a, 35b) fixés sur les adaptateurs (6) ou sur une jupe fixe (8) entourant les adaptateurs.

7. Enceinte suivant l'une quelconque des revendications 1 à 6, caractérisée par le fait que les joints d'étanchéité (15, 25 , 33, 37, 37') sont réalisés en l'un des matériaux suivants :
- fibres de verre tressées,
- fibres céramiques tressées,
- enveloppe de toile de verre bourrée de fibres de verre en vrac,
- enveloppe de fibre de céramique bourrée de fibres céramiques en vrac,
- tresse métallique en acier inoxydable austénitique,
- tresse en fibres de verre dans laquelle est incorporé un ressort en acier inoxydable austénitique,
- joint de silicone.

8. Enceinte suivant l'une quelconque des revendications 1 à 7, caractérisée par le fait que les parois calorifuges (13, 14, 41, 46) comportent des couches externes en tôle d'acier inoxydable entre lesquelles est intercalé un empilement alvéolaire de feuilles en acier inoxydable.

## Patentansprüche

1. Verschluss- und Abdeckungsanordnung (19) für die konvexe Oberseite (2a) des Deckels (2) des Behälters eines Druckwasserreaktors mit gewölbter Form, durch welche rohrförmige Adapter (6) verlaufen, die einen über die Oberseite (2a) des Deckels (2) des Behälters (1) überstehenden Bereich aufweisen, an dessen Ende ein Verschiebungsmechanismus (7) eines Steuerstabs befestigt ist, wobei die Anordnung (10) eine rohrförmige Seitenwand (13), die auf der Oberseite (2a) des Behälterdeckels (2) ruht und die Gesamtheit der Durchgangsadapter (6) des Deckels (2) umgibt, und eine obere Verschlußwand (14) aufweist, die am oberen Bereich der Seitenwand (13) unterhalb der Steuermechanismen (7) befestigt ist und durch die die Adapter (6) verlaufen,
**dadurch gekennzeichnet, daß**
die Seitenwand (13) und die obere Wand (14) in Form von wärmedämmenden Wänden ausgebildet sind, die untereinander verbunden sind und auf dem Deckel (2) des Behälters über Dichtungen (15, 25) ruhen, wobei Dichtungen (27) ferner die Dichtigkeit der Durchführungen der Adapter (6) in der oberen Wand (14) sicherstellen, wodurch eine Kammer (30) zum Abfangen von Fluid zwischen der Anordnung (10) und der Außenfläche des Deckels (2) des Behälters begrenzt ist, und daß die Anordnung (10) eine Einrichtung (31) zum Entnehmen von Gas aus der Fluidabfangkammer (30) aufweist.

2. Anordnung nach Anspruch 1, dadurch gekennzeichnet, daß die obere Wand (14, 16) aus flachen Platten (35, 36, 50) gebildet ist, die an ihren Rändern mit dazwischenliegenden Dichtungen (37, 37', 57) verbunden sind, wobei wenigstens ein Teil der Ränder der Platten Durchgangsöffnungen (55) der Adapter (6) begrenzt.

3. Anordnung nach Anspruch 2, dadurch gekennzeichnet, daß jede der Platten (35, 35a, 35b) eine flache erste seitliche Anschlußfläche (38, 38a, 38b) und eine stufenförmige zweite seitliche Anschlußfläche (39, 39a, 39b) umfaßt, wobei die Durchgangsöffnungen der Adapter (6) in den ebenen Anschlußflächen (38, 38a, 38b) der Platten (35, 35a, 35b) gebildet sind.l

4. Anordnung nach Anspruch 2, dadurch gekennzeichnet, daß jede der Platten (50) zwei gegenüberliegende ebene Anschlußflächen (51a, 51b) aufweist, in denen Durchgangsöffnungen (55) der Adapter (6) gebildet sind.

5. Anordnung nach einem der Ansprüche 1 bis 4, dadurch gekennzeichnet, daß die Einrichtung (31) zum Entnehmen von Fluid durch ein Netz zum Entnehmen von Fluid an einer Mehrzahl von Punkten an der Unterseite der flachen oberen Wand (14, 16) gebildet ist.

6. Anordnung nach einem der Ansprüche 1 bis 5, dadurch gekennzeichnet, daß sie ferner wenigstens zwei Träger (45) zum Halten der Platten (35, 35a, 35b) umfaßt, die an den Adaptern (6) oder einer die Adapter umgebenden festen Schürze (8) befestigt sind.

7. Anordnung nach einem der Ansprüche 1 bis 6, dadurch gekennzeichnet, daß die Dichtungen (15, 25, 33, 37, 37') aus einem der folgenden Materialien gebildet sind:
- geflochtene Glasfasern,
- geflochtene Keramikfasern,
- Glasfasergewebehülle, gefüllt mit ungeordneter Glasfaser,
- Keramikfaserhülle, gefüllt mit ungeordneter Keramikfaser,
- Metalllitze aus rostfreiem austenitischem Stahl,
- Glasfaserlitze, in die eine austenitischem rostfreiem Stahl gefertigte Feder eingeschlossen ist,
- Silicondichtung.

8. Anordnung nach einem der Ansprüche 1 bis 7, dadurch gekennzeichnet, daß die wärmedämmenden Wände (13, 14, 41, 46) Außenschichten aus rostfreiem Stahlblech aufweisen, zwischen denen eine wabenartige Schichtung von dünnen Stahlblechen angeordnet ist.

## Claims

1. Containing and covering shell (10) for the upper convex surface (2a) of the cover (2) of the vessel of a pressurized-water nuclear reactor of bulbous form, through which tubular adaptors (6) pass, which adaptors have a part projecting above the upper surface (2a) of the cover (2) of the vessel (1) at the end of which there is secured a displacement mechanism (7) of a control rod, the shell (10) comprising a lateral wall (13) of tubular shape bearing on the upper surface (2a) of the cover (2) of the vessel and surrounding all the adapters (6) passing through the cover (2) and an upper closing wall (14) secured on the upper part of the lateral wall (13) below the control mechanisms (7) and through which the adaptors (6) pass, characterised in that the lateral wall (13) and the upper wall (14) are produced in the form of heat insulated walls connected to one another and resting on the cover (2) of the vessel by means of leaktight joints (15,25), the joints (27) also ensuring the leaktightness of the of the passages through which the adaptors (6) pass in the upper wall (14) in such a manner as to delimit a fluid recovery chamber (30) between the shell (10) and the outer surface of the cover (2) of the vessel, the shell (10) comprising means (31) for sampling gas inside the fluid-recovery chamber (30).

2. Shell according to Claim 1, characterised in that the upper wall (14,16) is formed of flat panels (35,36,50) connected to one another along their edges with interposition of leaktight joints (37,37',57), at least one of the edges of the panels delimiting apertures (55) through which the adaptors (6) pass.

3. Shell according to Claim 2, characterised in that each of the panels (35, 35a, 35b) comprises a first flat side connection surface (38,38a,38b) and a second side connection surface in the form of a step (39,39a,39b), the apertures through which the adapters (6) pass being provided in the flat connection surfaces (38, 38a, 38b) of the panels (35, 35a, 35b).

4. Shell according to Claim 2, characterised by that fact that each of the panels (50) comprises two flat opposite side connection surfaces (51a,51b) in which there are provided apertures (55) through which the adaptors (6) pass.

5. Shell according to any one of Claims 1 to 4, characterised in that the means (31) for sampling the fluid is formed of a network for sampling the fluid at a plurality of points on the lower surface of the flat upper wall (14, 16).

6. Shell according to any one of Claims 1 to 5, characterised in that it comprises at least two girders (45) for maintaining the panels (35, 35a, 35b) secured to the adapters (6) or on a fixed skirt (8) surrounding the adapters.

7. Shell according to any one of Claims 1 to 6, characterised in that the leaktight joints (15, 25, 33, 37, 37') are produced of one of the following materials:
- braided glass fibres;
- braided ceramic fibres;
- glass fabric envelope packed with glass fibres in bulk;
- ceramic fibre envelope packed with ceramic fibres in bulk;
- metallic braid of austenitic stainless steel ;
- braid of glass in which is included a spring of austenitic stainless steel fibres ; and
- silicone joint.

8. Vessel according to any one of Claims 1 to 7, characterised in that the heat-insulating walls (13,14,41,46) comprise external layers of stainless steel sheet between which there is intercalated an alveolar stack of stainless steel leaves.
